Europäisches Patentamt

European Patent Office

Office européen des brevets

(19)

(11) EP 0 994 077 A2

(12) EUROPEAN PATENT APPLICATION

(43) Date of publication:
19.04.2000 Bulletin 2000/16

(51) Int. Cl.⁷: C03B 37/012

(21) Application number: 99119511.6

(22) Date of filing: 01.10.1999

(84) Designated Contracting States:
AT BE CH CY DE DK ES FI FR GB GR IE IT LI LU
MC NL PT SE
Designated Extension States:
AL LT LV MK RO SI

(30) Priority: 16.10.1998 JP 31411298

(71) Applicants:
• Heraeus Quarzglas GmbH & Co. KG
63450 Hanau (DE)
• SHIN-ETSU QUARTZ PRODUCTS CO., LTD.
Shinjuku-ku, Tokyo 160-0023 (JP)

(72) Inventors:
• Shimada, Atsushi
Koriyama-shi, Fukushima 963-0111 (JP)
• Kato, Toshiyuki
Koriyama-shi, Fukushima 963-0702 (JP)
• Suzuki, Masanori
Koriyama-shi, Fukushima 963-8041 (JP)
• Watabe, Yutaka
Koriyama-shi, Fukishima 963-0104 (JP)

(74) Representative:
Kühn, Hans-Christian
Heraeus Holding GmbH,
Stabsstelle Schutzrechte,
Heraeusstrasse 12-14
63450 Hanau (DE)

(54) Quartz glass tube having tapered groove and method for producing preform for optical fibers using the same

(57) An object of the present invention is, to provide a quartz glass tube for use as the preform for optical fibers or an auxiliary quartz glass tube to be connected to the tube for a preform for optical fibers, having a tapered groove provided in the vicinity of the edge portion of the supporting sides thereof, and furthermore, the edge plane of the supporting side of the quartz glass tube is specular finished. The object is also accomplished by a method of producing a preform for optical fibers using the same tapered groove.

Fig. 1

## Description

## Detailed Description of the Invention

Industrial Field of Application

The present invention relates to a quartz glass tube having tapered groove and a method for producing a preform for optical fibers using said tube. In further detail, it relates to a quartz glass tube for preforms for use in the production of a preform for optical fibers comprising inserting a core glass rod for use as the preform for optical fibers into a quartz glass tube for use as the preform for optical fibers and then heating and melt welding them into a monolithic body, or to an auxiliary quartz glass tube connected thereto, having a tapered groove in the vicinity of the edge portion of the supporting side of said quartz glass tube. The present invention further relates to a method for producing a preform for optical fibers using said quartz glass tube.

Background of the Invention

Large amounts of optical fibers are being used, particularly, single mode optical fibers. With the expansion in its field of use ranging from long distance main communication lines to domestic lines, it is expected that still larger amount of optical fiber will be necessary. To meet such a demand in the expansion of usage, it is indispensable to realize mass production and cost reduction in the production of optical fibers. This can be accomplished most simply by forming a large and a long optical fiber preform and by then drawing it. Such a large and long optical fiber preform is proposed in, for example, JP-A-7-1091367. The optical fiber preform described in that patent application is produced by a so-called rod-in-tube method comprising inserting a core glass rod for optical fiber preform into a quartz glass tube for optical fiber preform, and then heating them together to melt weld them into a monolithic product.

In the rod-in-tube method above, it is necessary to accurately align the circular center of the quartz glass tube for the optical fiber preform with the heating source and the like, thereby preventing the elliptic deformation of optical fiber preforms and cores from occurring, and also avoiding the misalignment of the center of the preform and the core. At the same time, it is necessary to align the circular center of the quartz glass tube for the optical fiber preform with the optical fiber preform of the drawing out side while removing the curvature of the optical fiber preform. Moreover, it is also required to minimize the loss of the expensive quartz glass tube used for the optical fiber preform. To align the circular center described above, it is necessary to maintain the large and heavy quartz glass tube at high accuracy. However, the support jigs used in the conventional rod-in-tube methods are, in general, as described in, for example, JP-A-7-196332 and JP-A-8-277138, chucks which fix the quartz glass tube for optical fiber preforms or an auxiliary quartz glass connected thereto. Thus, to support the quartz glass tubes for optical fiber preforms increased in size and weight, the chucks themselves must be increased in size and the friction between the chucks and the quartz glass tubes must be also increased. The friction can be increased by, for instance, changing the material at the contact portion to a material having a larger frictional resistance, increasing the contact area, or enlarging the pressing force of the chucks, etc. However, concerning the heat resistance, the change in material is not feasible if the frictional resistance is taken into account. The increase in contact area is limited to a certain extent, and an increase in pressing force may cause the breakage of the quartz glass tube due to the partial increase of stress generated by the pressing force. Accordingly, the chucks had to be increased to a size more than it was necessary, and this led to an increase in production cost. To reduce the cost, on the other hand, as described above, it is essential to use the quartz glass tube for the optical fibers as effectively as possible. Moreover, in the conventional rod-in-tube method, because the quartz glass tube and the core glass rod are heated to melt weld them into a monolithic body while reducing the pressure of the interstices therebetween, an O-ring was used to maintain the connecting portion between the quartz glass tube and the pressure reducing apparatus airtight. However, the O-ring is made from a rubber or a like material, and hence, it suffered a poor heat resistance. Thus, when the distance between the melt welding portion of the quartz glass tube and the connecting portion with the O-ring is reduced, there occurred a problem of exceeding the limit of heat resistance of the O-ring. This led to the shortening of effective usable length of the quartz glass for the optical fiber preform, or, in case of obtaining the effective usable length of the quartz glass tube for the preform using an auxiliary quartz glass tube, it was necessary to considerably increase the length of the auxiliary quartz glass tube.

In the light of the aforementioned circumstances, a study was conduczed, and, as a result, it was found that even if it were a large quartz glass tube, it can be maintained accurately and stably by providing a tapered groove, said taper being provided in such a manner that the diameter thereof increases as it approaches the edge plane side, in the vicinity of the edge portion of the supporting side of the quartz glass tube, and by matching the tapered portion of the groove with the tapered portion of the supporting jig by planar contact. Furthermore, by specular finishing the edge plane of the supporting side of the quartz glass tube provided with the tapered groove, and by connecting said edge plane with the edge portion of a pressure reducing apparatus via a heat resistant sheet incorporated therebetween, the airtightness can be maintained even at higher temperatures and the effective usage of the quartz glass tube for preforms can be elongated; or, in case an auxiliary quartz glass tube is used, a short auxiliary quartz glass tube can be used. The present invention isbased on these findings.

Summary of the Invention

It is an object of the present invention, in the method for producing an optical fiber preform, to provide a quartz glass tube for optical fibers capable of being accurately and stably maintained, or an auxiliary quartz glass tube to be connected thereto.

It is another object of the present invention to provide a method for producing an optical fiber preform suitable for reducing the cost of production, which is capable of elongating the effective length of usage of the quartz glass tube for optical fiber preforms, or of shortening the auxiliary quartz glass tube.

These objects and others that will become apparent from the following specification are achieved by providing a quartz glass tube for a preform for optical fibers or an auxiliary quartz glass tube to be connected to the tube for a preform for optical fibers, having a tapered groove provided in the vicinity of the edge portion of the supporting sides thereof, and the edge plane of the supporting side of the quartz glass tube is specular finished. The object is also accomplished by a method of producing a preform for optical fibers using the tapered groove.

The quartz glass tube for preforms above is produced by forming a porous soot body (hereinafter, a porous soot body made from fine silica glass particles is referred to as „a porous soot body") by depositing fine silica glass particles generated by flame hydrolysis of a high purity siloxane compound such as silicon tetrachloride or an organic silicon compound, subjecting the resulting product to dehydration treatment, vitrifying it to a transparent product, and then forming the quartz glass ingot obtained into a tube by mechanical grinding and the like. The auxiliary quartz glass tube that is connected to the quartz glass tube for preforms is the so-called dummy tube, and, as compared with the quartz glass tube for preforms, it is a cheaper quartz glass tube containing a larger amount of impurities and bubbles. Since the notation of „dummy tube" is used also for the quartz glass tube that is connected to the pulling out side, the dummy tube on the support side in the present invention is called „an auxiliary quartz glass tube". In the present invention, a tapered groove is provided in the vicinity of the edge portion of the supporting side of the auxiliary quartz glass tube or the quartz glass tube for preforms, so that the auxiliary quartz glass tube or the quartz glass tube for preforms can be accurately and stably supported by the feeding mechanism of the rod-in-tube apparatus. The diameter of the taper above is preferably increased as it approaches the edge plane side, and, by thus increasing the diameter, the tapered portion of the groove can be brought into planar contact with the tapered portion of the supporting jig and accurately fixed. The taper angle above is preferably in a range of from 30 to 60°. If the taper angle should be out of the aforementioned range, the planar contact of the tapered groove with the supporting jig becomes insufficient so as to cause problems in supporting the weight and it is difficult to accurately align the circular center. By thus fixing, the circular alignment of the quartz glass tube and the heating source is maintained accurately; thus, the elliptic deformation of optical fiber preforms and cores is prevented from occurring, and also the misalignment of center of the preform and the core is avoided. Furthermore, the optical fiber preform can be maintained free from curving. The vicinity of the edge portion of the supporting side of the quartz glass tube according to the present invention refers to a range near to the edge plane of the quartz glass tube, which sufficiently holds the weight of the quartz tube on supporting the quartz glass tube.

An auxiliary groove can be provided to the lower portion of the tapered groove above. By thus providing an auxiliary supporting jig to the auxiliary groove, even if there should occur a breakage of the tapered groove, the quartz glass tube would not drop off, and thereby accidents can be prevented from occurring. Such a tapered groove or auxiliary groove is formed by grinding using a cylindrical grinding machine and the like. Furthermore, by specular finishing the edge plane of the quartz glass tube and connecting the edge plane to the edge portion of the pressure reducing apparatus while incorporating therebetween a heat resistant sheet (e.g., of carbon, alumina, etc.), the airtightness can be maintained even under high temperatures. This enables a quartz glass tube for optical fiber preforms having a longer effective usable length, or an auxiliary quartz tube having a shorter length. The specular finishing treatment can be performed by polishing, and a sufficiently practical airtightness can be assured even when the material used for the heat resistant sheet or the degree of reduced pressure results in a lower precision. The reason for this is that, in accordance with the present invention, a larger contact area can be obtained between the heat resistant sheet and the quartz glass tube or the edge portion of the pressure reducing apparatus, and thus, this provides a superior airtightness as compared with an O-ring having a smaller contact area.

Concerning the core glass rod for optical fibers, on the other hand, it is a light transmission part, a quartz glass rod which constitutes the optical core portion optionally having formed on the periphery thereof an optical cladding. That is, in the present invention, the term „core glass rod" is a general term inclusive of core rods and cladded core rods. A core rod having no clad portion can be produced by a known method such as a VAD process or an OVD process, and a cladded core rod can be produced by a method comprising forming the core portion and the cladding at a time by means of, for example, aVAD or OVD process; jacketing a core rod with a quartz glass tube; forming the cladding around the core rod by anOVD process or the like; or by a combination of the methods above.

Brief Description of the Drawings

Fig. 1 is a schematic longitudinal cross section view showing a quartz glass tube for use as a preform for optical fibers provided thereto a tapered groove, being fixed with a supporting jig.

Fig. 2 is a schematic longitudinal cross section view showing a quartz glass tube fixed with a supporting jig shown in Fig. 5.

Fig. 3 is a schematic longitudinal cross section view showing a quartz glass tube for use as a preform for optical fibers having a non-tapered groove, being fixed with a supporting jig.

Fig. 4 is a planar view of the supporting jig described in Example 1.

Fig. 5 is a planar view of the supporting jig described in Example 2.

Description of the preferred Embodiments

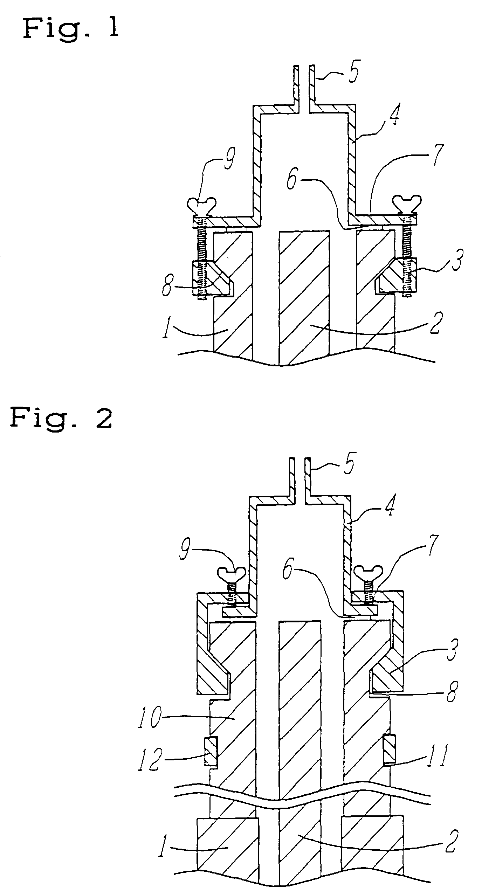

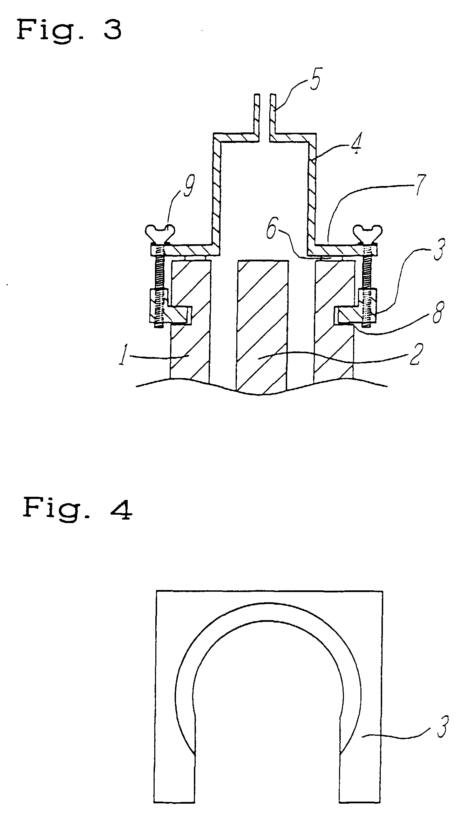

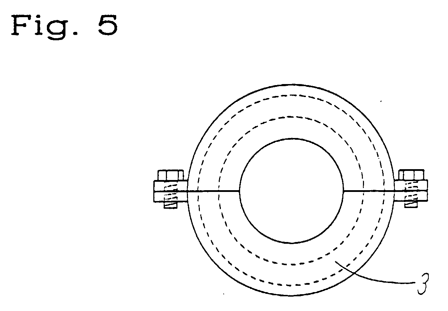

An embodiment of a quartz glass tube having provided thereto a tapered groove and of a method for producing an optical fiber preform using a core glass rod for optical fiber preforms are described below. More specifically, referring to Fig. 1, a tapered groove 8 is provided on a quartz glass tube 1, and a supporting jig 3 is mated therewith to bring the tapered portion of the groove into planar contact with the tapered portion of the supporting jig. Separately, the edge plane of the quartz glass tube 1 is specular finished, and a flange portion 4 of the edge portion 4 of the pressure reducing apparatus is fixed with the quartz glass tube 1 with a fixing bolt 9 while incorporating a heat resistant sheet 6 therebetween to assure airtightness. Then, the inside of the quartz glass tube is reduced in pressure by reducing pressure through a connecting portion 5 of the pressure reducing means that is provided to the edge portion 4 of the pressure reducing apparatus. The quartz glass tube and the core glass rod for optical fibers are heated to melt weld them together to obtain a monolithic product. In the method for producing an optical fiber according to the present invention, because airtightness is assured by the incorporation of a heat resistant sheet, the quartz glass tube for preforms can be used near to the limit of heating the heat resistant sheet, and thereby the effective usable length can be taken longer or the auxiliary quartz glass tube can be shortened.Therefore, the production cost of the optical fibers can be reduced. For the supporting jigs for use in the method of producing the optical fiber preforms according to the present invention, there can be mentioned a fixing jig shown in Fig. 4, which clamps the tapered groove, or a jig shown in Fig. 5, which can be divided in two fractions, said fractions each matched with the tapered groove and then fixed together.
Examples of the present invention are described below, but it should be understood that the present invention is by no means limited thereby.

Example 1

High purity silicon tetrachloride was subjected to flame hydrolysis in an oxyhydrogen flame to produce fine particles of silica glass. After depositing the fine particles around a base body, the resulting product was vitrified to obtain a transparent body, and was subjected to mechanical grinding to obtain a quartz glass tube for optical fiber preforms having an outer diameter of 160 mm and an inner diameter of 50 mm. A tapered groove was provided in the vicinity of the upper edge portion of the resulting quartz glass tube for optical fibers by using a cylindrical grinding machine, and the upper edge plane was polished by using a belt sander using a #1000 diamond paper to obtain a specular finished plane. A core glass rod for optical fiber preforms 46 mm in outer diameter was inserted into the thus obtained quartz glass tube for optical fibers, and the resulting product was supported with a supporting jig fixed to a feeding mechanism of a vertical rod-in-tube apparatus. Fig. 1 is a schematically drawn longitudinal cross section view showing the supporting state of the quartz glass tube for preforms. In Fig. 1 are shown the quartz glass tube for preforms 1, the core glass rod for preforms 2, a supporting jig 3, an edge portion 4 of a pressure reducing apparatus, a connecting portion 5 led to a pressure reducing means, a carbon sheet 6, a flange portion 7 provided to the edge portion of the pressure reducing apparatus, a tapered groove 8, and a fixing bolt 9. In supporting the quartz glass tube, the supporting jig shown in Fig 4 was matched with the tapered groove 8 of the quartz glass tube for preforms from the grooved side, and were fixed by using the fixing bolt 9. To maintain airtightness, in the present case, a 3 mm thick carbon sheet 6 was mounted between the specular finished plane of the edge plane of the quartz glass for preforms and the flange portion 7 provided to the edge portion of the pressure reducing apparatus. The quartz glass tube for preforms and the core glass rod for preforms were heated together, and while stretching them together, they were melt welded into a monolithic body. The optical fiber preform thus obtained had an outer diameter of 75 mm, a precision in curvature of 0.2 mm/m, and an elliptic ratio of 0.5 %. The elliptic ratio is a value obtained by continuously measuring the cross section of the optical fiber preform while rotating it in the circumferential direction to observe the maximum and minimum values of the outer diameter, and by then obtaining calculated values in accordance with the formula: [(maximum value - minimum value)/designed value] $\times$ 100 . For reference, the standard for an optical fiber preform requires a precision in curvature of 1 mm/m or lower and an elliptic ratio of 2 % or lower.

The temperature in forming a monolithic body by melt welding the quartz glass tube for optical fibers with the core glass rod was monitored. It was found that the temperature in case of melt welding with a residual length of 80 cm from the carbon sheet provided to the edge plane elevated to 650 °C, and the quartz glass tube for preforms was found to be effectively used with a residue of only 80 cm in length from the edge plane of the supporting side.

Comparative Example 1

An optical fiber preform was produced in the same manner as in Example 1, except for airtight sealing the flange portion of the tubular body and the quartz glass tube for optical fiber preforms using an O-ring made of silicon rubber. The temperature of the O-ring was monitored, and was found that the temperature reached the safety temperature of 250 °C for the O-ring in case the quartz glass tube for preforms was melt welded into a monolithic body with a residual length of 190 cm from the edge portion of the quartz glass tube; hence, the effective usable length was up to a residual distance of 190 cm from the supporting edge plane of the quartz glass tube for the preforms.

Comparative Example 2

An optical fiber preform was produced in the same manner as in Example 1, except for using a quartz glass tube for optical fibers provided with a taper-free groove as shown in Fig. 3. A precision in curvature of 0.8 mm/m and an elliptic ratio of 2.2 % were obtained for the resulting product.

Example 2

An optical fiber preform was produced in the same manner as in Example 1, but in this case, a supporting jig shown in Fig. 5 was used in the place of the supporting jig shown in Fig. 4, and an auxiliary quartz glass tube was welded to the quartz glass tube for optical fiber preforms. Furthermore, a tapered groove was provided in the vicinity of the edge portion of the supporting side of the auxiliary quartz glass, and an auxiliary groove was provided to the lower side thereof. The cross section view of the supporting state is shown schematically in Fig. 2. In Fig. 2 are shown a quartz glass tube for preforms 1, a core glass rod for preforms 2, a supporting jig 3, an edge portion 4 of the pressure reducing apparatus, a connecting portion 5 led to a pressure reducing means, a carbon sheet 6, a flange portion 7 provided to the edge portion of the pressure reducing apparatus, a tapered groove 8, a fixing bolt 9, an auxiliary quartz glass tube 10, an auxiliary groove 11, and an auxiliary supporting jig 12. An optical fiber preform was thus produced by heating and thereby melt welding the quartz glass tube and the core glass rod for preforms in the same manner as described in Example 1. A precision in curvature of 0.18 mm/m and an elliptic ratio of 0.5 % were obtained for the resulting product.

The quartz glass tube according to the present invention has a tapered groove provided on the edge portion thereof, and by matching the tapered portion with a tapered portion of a supporting jig by planar contact, the circular alignment with a heating source and the like can be performed with accuracy and stability. Furthermore, because the edge plane of said quartz glass tube is specular finished, the air tightness inside the tube can be maintained at high temperatures by mounting a heat-resistant sheet on the edge plane. Thus, the effective length for use can be made longer, and, in case of using an auxiliary quartz glass tube, a shorter quartz glass tube can be used therefor to thereby reduce the cost for producing optical fibers.

**Claims**

1. A quartz glass tube for a preform for optical fibers or an auxiliary quartz glass tube to be connected to the tube for a preform for optical fibers, having a tapered groove, wherein the tapered groove is provided in the vicinity of the edge portion of the supporting sides thereof.

2. A quartz glass tube as claimed in Claim 1, wherein said taper is such that the diameter is increased as it approaches the edge portion side of the supporting side of the quartz glass tube.

3. A quartz glass tube as claimed in Claim 2, wherein said taper has a taper angle in the range of from 30 to 60 degrees.

4. A quartz glass tube as claimed in any of Claims 1 to 3, wherein the edge plane of the supporting side of the quartz glass tube is specular finished.

5. A method for producing a preform for optical fibers comprising inserting a core glass rod for use as a preform for optical fibers into a quartz glass tube for use as a preform for optical fibers and heating them to melt weld to obtain a monolithic preform for optical fibers, characterized in that a tapered groove is provided in the vicinity of the edge portion on the supporting side of said quartz glass tube or of the auxiliary quartz glass tube and in matching a supporting jig to the groove, the tapered portion of the groove is brought in planar contact with the tapered portion of the supporting jig.

6. A method for producing a preform for optical fibers as claimed in Claim 5, wherein, the edge plane on the supporting side of the quartz glass tube for use as a preform for optical fibers or of the auxiliary quartz glass tube connected to said quartz glass tube is specular finished, and said edge plane is connected with the edge portion of a pressure reducing apparatus via a heat resistant sheet incorporated therebetween.

Fig. 1

Fig. 2

Fig. 3

Fig. 4

# Fig. 5